# EUROPEAN PATENT APPLICATION

(11) **EP 3 363 313 A1**
(43) Date of publication of application: **22.08.2018**
(21) Application number: 18157769.3
(22) Date of filing: 21.02.2018
(51) Int. Cl.: A42B 3/12

(54) **HELMET**

(30) Priority: 21.02.2017 GB 201702764
(71) Applicant: Pembroke Bow Limited, Mickle Trafford Chester CH2 4QH (GB)
(72) Inventor: Burek, Roy, Chester, Cheshire CH24QH (GB); Stewart, Matthew, Chester, Cheshire CH24QH (GB)
(74) Representative: Games, Robert Harland

(57) **Abstract**

According to the present invention there is provided a helmet (10) comprising an outer shell (12), an inner lining (16) and a mesh (14) between the outer shell (12) and the inner lining (16), the mesh (14) having a plurality of walled cells (20), the length of the cells (20) extending substantially normally between the outer shell (12) and inner lining (16).

## Description

The present invention relates to protective headgear, specifically a helmet.

### BACKGROUND TO THE INVENTION

Helmets need to include effective shock absorbers to minimise the potential for concussion or other injuries during an impact to the head. Solid inserts, shaped to conform to the head, are often used as shock absorbers. During an impact, the insert is crushed, absorbing some kinetic energy as it deforms.

Solid inserts for helmets are often formed of expanded polystyrene (EPS) because it is cost effective and light. However, EPS inserts can cause a user's head to become warm and even hot, because EPS is an extremely effective insulator. This may be undesirable, particularly if the helmet is to be used in sporting applications. Some helmets, for example, cycling helmets and water sports helmets are vented and the EPS does not form a complete shell. However, horse riding helmets typically offer a complete shell, and horse riding requires substantial physical exertion on the part of the rider, causing the helmet to become hot.

Helmets are not only required to absorb shock from an oblique impact, but must also be resistant to puncture by a pointed object, for example a stud on a horse's hoof or a masonry comer.

When a material is deformed, there is a component of elastic deformation and a component of plastic deformation. Elastic deformation is reversible: the deformed structure will rebound to its former dimensions when the deforming force is removed. Plastic deformation is irreversible: the material does not return to its former dimensions and is permanently deformed. In plastic deformation, kinetic energy is dissipated in the material, while in elastic deformation, kinetic energy is conserved and the deforming impact rebounds.

Plastic deformation is desirable in protective headgear, as it reduces the amount of kinetic energy that is absorbed by the human head, minimising damage to essential biological structures.

When EPS is deformed, the deformation is largely plastic, making it an effective shock absorber in protective headgear. However, there is still a non-trivial amount of elastic deformation. It is desirable to minimise elastic deformation to provide a more effective shock absorber.

It is also desirable to minimise the weight of a helmet to reduce the load on a user's head and neck, particularly in sporting applications such as horse riding, which may place strain on the neck. Secondary advantages of reduced weight are manifest in easier handling of the helmet.

EPS includes air bubbles. When it is deformed and compressed, densification will eventually occur. This is when the porosity of the EPS is reduced, resulting in increased density. After densification, the EPS is more difficult to deform and functions less effectively as a shock absorber. It is desirable for a shock absorber to be capable of sustaining compression to a small volume before densification occurs.

Published document US 2014/0013492 discloses a helmet having an outer layer, an inner layer and a deformable intermediate layer comprising cells.

It is an object of the present invention to provide an improved helmet with reduced weight, enhanced ventilation and reduced elastic deformation, among other benefits.

### STATEMENT OF INVENTION

According to the present invention there is provided a helmet comprising an outer shell, an inner lining and a mesh between the outer shell and the inner lining, the mesh having a plurality of walled cells, the length of the cells extending in a substantially normal direction to the outer shell and inner lining, each cell substantially having the form of a prism, characterised in that the cross section of each prism includes a re-entrant angle and substantially has the form of a buckled pentagon.

The mesh may have a thickness of one cell. This provides for simple manufacturing as it allows the mesh to be manufactured as a flat sheet and then shaped.

Each cell may be longer in a radial direction than it is wide. This increases the density of the mesh for a given thickness, which allows a larger amount of kinetic energy to be absorbed.

Each cell may have a first end and a second end and a side wall, and each end may be open, the side wall connecting the ends. The open ends allow air to flow through the mesh. This provides ventilation to cool the head of the wearer. It also means that there are no sealed air pockets present, which would cause elastic deformation in the case of an impact, as air is elastically compressible. The side walls provide the structure of the mesh and absorb kinetic energy as they deform when an impact is sustained.

Each end of each cell may face in a radial direction relative to the head of the wearer. This provides an appropriate degree of resistance to deformation as the cells are much harder to deform end-on. If they were not arranged end-on they would collapse easily and provide less protection. It also allows the mesh to deform into a concave shape. The end-on arrangement provides the mesh with a large resistance to deformation in a radial direction, and a much lower resistance to deformation in a tangential direction. This allows the helmet to absorb radial or direct impacts, while deflecting and partially absorbing tangential impacts, advantageously limiting the amount of rotation of the head of the wearer when subjected to a large tangential force.

The cells may be arranged so that the side walls of adjacent cells coincide. This provides efficient use of material and a regular mesh.

The thickness of the mesh may be substantially between 0.5 cm and 5 cm. This provides a distance over which the mesh can deform and collapse, absorbing kinetic energy during an impact. The thickness of the mesh is limited to reduce the weight of the helmet and because bulky helmets are generally considered aesthetically undesirable. Bulky helmets may also be undesirable in some applications for aerodynamic reasons.

The width of each cell may be between 0.4 cm and 2 cm. This provides an appropriate density of material. The density must be low so as not to provide unnecessary weight, but high enough to provide adequate kinetic energy absorption. The size of the cells will depend also on the thickness of their walls, as thicker walls will result in a denser mesh for cells of the same size.

Each cell substantially has the form of a prism. This is an easily manufactured shape which provides the features discussed above.

The axis of each prism may be disposed substantially normal to the surface of the helmet. This arranges the cells in an end-on configuration relative to the head of the user and arranges them side-by-side in the mesh. The previously recited advantages are thus achieved.

The cross section of each prism includes a re-entrant angle. This allows a flat sheet of the mesh to be deformed into a concave structure. Without a re-entrant angle, the mesh will deform into a saddle shape when bent, making it impossible to conform to the shape of a helmet without cutting into sections, which would seriously undermine the structural integrity of the helmet and reduce the degree of protection provided. The re-entrant angle allows the mesh to be manufactured in sheets and shaped into a concave or bowl-shaped structure to conform to a user's head, allowing helmets to be manufactured economically.

The cross section of each prism substantially has the form of a pentagon.

The walls of the cells may be made of a deformable material. This allows the mesh to deform on impact and absorb kinetic energy. It also allows the mesh to be slightly flexible so that it can conform to the different head shapes.

The deformable material may be aluminium foil. Aluminium foil is preferred for its density and strength characteristics and its low weight, but the use of other materials is envisaged. Aluminium also provides efficient conduction of heat away from the head of the rider via the mesh. Consequently, when riding for example, the helmet helps to keep the head of the rider cool.

The mesh may be formed from a series of strips of deformable material that are joined and folded to define the cells.

The outer shell may be rigid. This provides protection against an impact from a pointed object, for example a horse's hoof or a corner of masonry. It is necessary for the outer shell to provide enhanced protection against such an impact, as the mesh is not resistant to piercing impacts.

The outer shell may be formed of a glass fibre composite.

The outer shell may be formed of a composite of Kevlar and heavy nylon.

The mesh may be indirectly joined to the outer shell.

The mesh may be joined to the outer shell by pads which serve to space the mesh from the outer shell.

There may be a space between the outer shell and the mesh. This allows air to flow to provide ventilation and prevent overheating of the head. It also reduces noise from the mesh scraping on the inside of the outer shell when in motion. Noise may be distracting to a wearer while performing sporting activities such as horse riding.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a cross-sectional view of a helmet;
Figure 2 shows a cross-sectional view of a single cell of the mesh of the helmet of Figure 1;
Figure 3 shows a cross-sectional view of a row of cells of the mesh of the helmet of Figure 1;
Figure 4 shows a cross-sectional view of two adjacent rows of cells of the mesh of the helmet of Figure 1;
Figure 5 shows a cross-sectional view of four adjacent rows of cells of the mesh of the helmet of Figure 1;
Figure 6 shows a perspective view of the mesh of the helmet of Figure 1 in isolation;
Figure 7 shows a perspective view of the interior of a helmet without the mesh or lining; and
Figure 8 shows a plan view of a concave side of the mesh of Figure 6.

### DESCRIPTION OF PREFERRED EMBODIMENTS

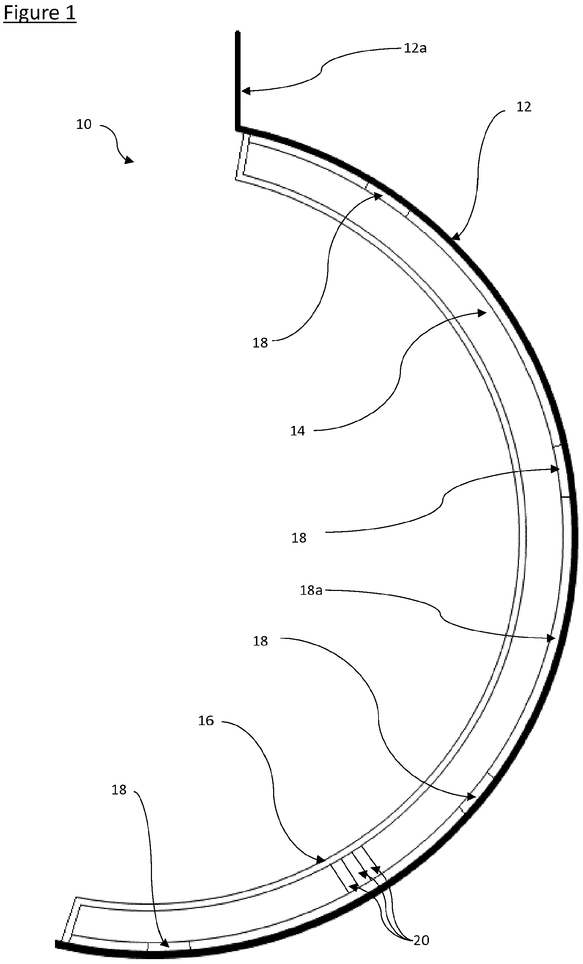

Referring firstly to Figure 1, a helmet is indicated generally in cross-section at 10. The helmet comprises an outer shell 12, a mesh 14 and an inner lining 16.

The outer shell 12 is so shaped and sized as to conform to the head of a wearer while providing space between the head and the outer shell 12 for the mesh 14 and the inner lining 16. Multiple sizes of outer shell 12 are provided to accommodate wearers of different head sizes. The outer shell 12 also includes a visor or peak 12a to protect the face of a wearer in the event of a forward fall. Other helmets are envisaged which may not include the visor or peak 12a, such as a jockey's helmet.

The outer shell 12 is dome shaped. The outer shell 12 is oblate. This allows the outer shell 12 to conform to the head of a wearer.

The outer shell 12 is made of a rigid material. It is puncture resistant and fracture resistant. The outer shell 12 is made of a glass fibre composite. The outer shell 12 includes an aramide fibre material. In this embodiment, it is a composite of Kevlar (RTM) and nylon. However, it could be made of any rigid material having appropriate properties. Twaron (RTM) could be used instead of or in addition to Kevlar (RTM).

A chin strap (not shown) is provided for passing under the chin of the wearer. This secures the helmet 10 to the wearer's head. The chin strap is attached to the inner lining 16 in this embodiment, however it may be attached to any other part of the helmet 10.

The mesh 14 is of concave shape and conforms to the interior of the outer shell 12. The mesh 14 is attached to a plurality of pads 18. Each pad 18 is attached to an inner surface of the outer shell 12 and to an outer surface of the mesh 14. Some of the pads 18 are substantially strips (viewed here in cross section). The pads 18 are provided with an adhesive. The pads 18 have shock absorbing and vibration damping properties. The pads 18 may be made of plastic or rubber foam.

The mesh 14 is dome shaped. The mesh 14 is oblate. The mesh 14 is of similar curvature to the outer shell 12, but smaller size.

The pads 18 space the mesh 14 from the interior surface of the outer shell 12. This provides a gap 18a between the mesh 14 and the outer shell 12. The gap 18a is substantially between 1 and 15 mm in thickness. Air can flow around the mesh 14 in the gap 18a. This provides ventilation and cooling. It also prevents scraping of the mesh 18 on the interior of the outer shell 12, which would cause an irritating or distracting noise and may degrade the mesh 14 and/or the outer shell 12.

The inner lining 16 is made of a soft fabric material. It protects the wearer's head from contact with the mesh 14 to provide comfort. The material of the inner lining 16 is breathable to provide ventilation. The inner lining 16 may also include apertures or vents for this purpose, but these are not illustrated here for clarity. The inner lining 16 may also include pads for comfort (not shown).

The mesh 14 is composed of cells 20. Only three cells 20 are shown in Figure 1 for clarity, though in the actual helmet a larger number of cells is present. The volume of the mesh 14 is almost entirely air, as the walls of the cells 20 are thin relative to the size of the cells. The walls of the cells are less than 1mm thick, and preferably less than 0.2 mm thick.

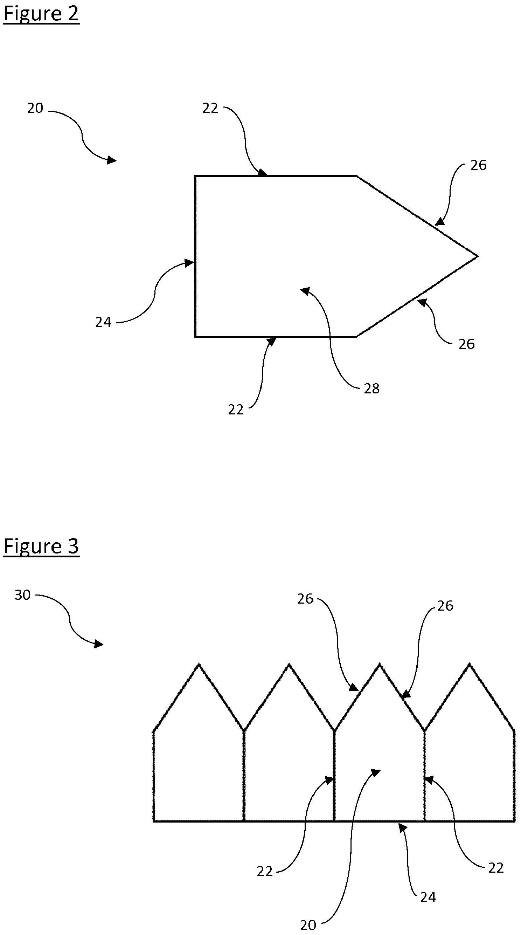

Referring now to Figure 2, a cell of the mesh 14 is indicated generally in cross-section at 20. Each cell of the mesh is substantially identical to each other cell of the mesh. The cross-sectional plane in each of Figures 2 to 5 is a curved concave plane conforming to the shape of the helmet.

Each cell of the mesh includes a pair of parallel sides 22, a third side 24 linking the parallel sides 22 and orthogonal to the parallel sides 22, and a pair of angled sides 26. The angled sides 26 are joined together at an internal angle of less than 180 degrees. Each angled side 26 is joined to one of the parallel sides 22.

The sides 22, 24, 26 therefore define a shape 28 that may be described as a square joined to a triangle.

In the mesh (14), the cells 20 are arranged in rows. Referring now to Figure 3, a row of cells 20 is indicated generally in cross-section at 30. Only the features of a single cell 20 are labelled for clarity.

The parallel sides 22 of each cell 20 coincide with the parallel sides 22 of its neighbouring cells 20. The angled sides 26 of all cells in a row are disposed on the same side of the row. The third sides 24 of all cells 20 in a row 30 are flush.

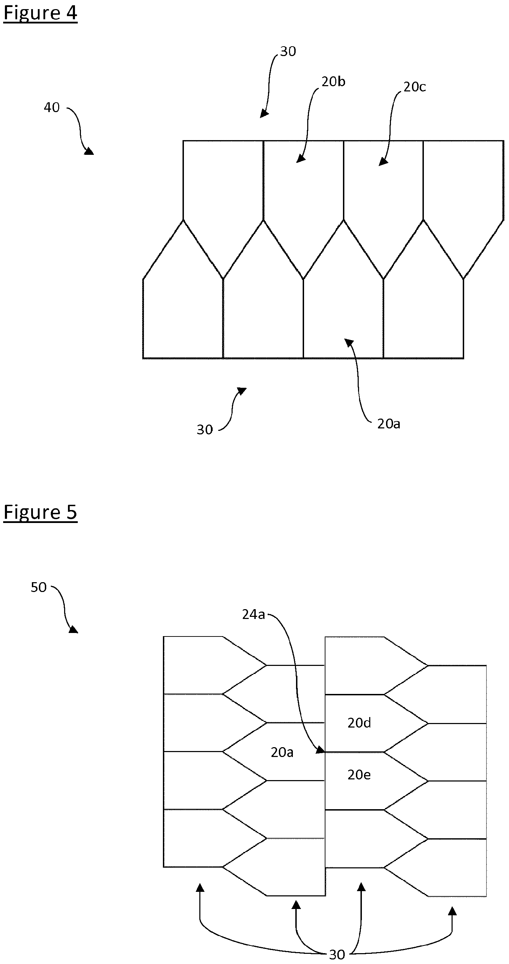

In the mesh (14), the rows 30 are arranged adjacent to one another. Referring now to Figure 4, a pair of adjacent rows 30 is indicated generally in cross-section at 40. The features of the cells are not labelled for clarity. The rows are shortened for clarity: in the preferred embodiment, each row includes many cells, for example between 10 and 1000 cells.

Each row 30 is rotated 180 degrees relative to its neighbouring rows 30, so that the angled sides (26) of the cells (20) of each row 30 face the angled sides (26) of the cells (20) of another row 30, and the third sides (24) of the cells (20) of each row 30 face and coincide with the third sides (24) of the cells (20) of another row 30. Each row 30 is also offset from its neighbouring rows 30 by half the length of a third side (24) of a cell (20). This allows the angled sides (26) of each cell 20a to coincide with the angled sides (26) of a pair of cells 20b 20c of a neighbouring row, each angled side of the original cell 20a coinciding with an angled side of a different adjacent cell 20b 20c.

Referring now to Figure 5, four adjacent rows 30 are indicated generally in cross-section at 50. Each third side (24) of each cell 20a (only one marked for clarity) therefore coincides at its midpoint 24a with the ends of the parallel sides (22) of a pair of cells 20d, 20e (only one of each marked for clarity) in an adjacent row 30. This provides a point 24a at which the third side 24 will buckle under pressure, providing a re-entrant angle, and allowing the mesh (14) to deform auxetically.

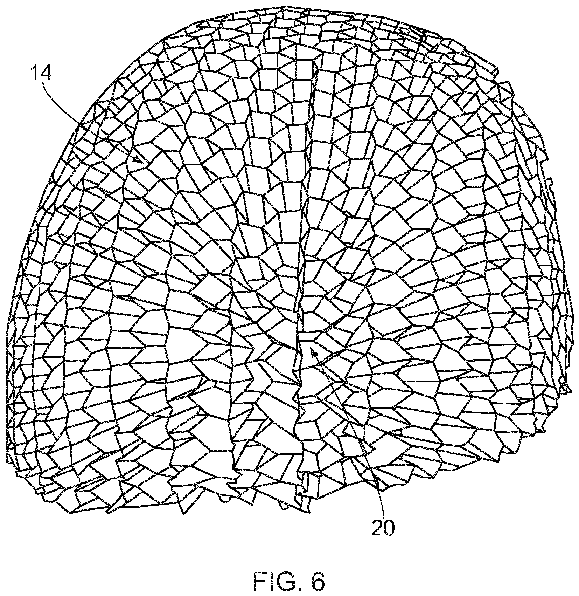

Referring now to Figure 6, the mesh 14 is shown in perspective separately to the other components of the helmet. A cell is indicated at 20. Buckling of the third wall (24) of each cell 20 has occurred. This allows the mesh 14 to conform to the shape of the wearer's head. The shape of the cross-section of each cell will therefore differ slightly from that shown in Figures 2 to 5. The degree of buckling may vary between different locations in the mesh.

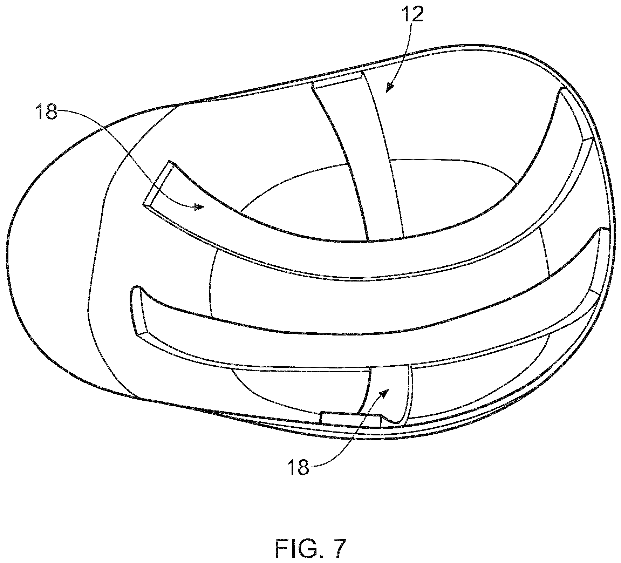

Referring now to Figure 7, the outer shell 12 and pads 18 are shown in perspective without the mesh 14 or inner lining 16. The pads 18 are strips and are arranged in a different configuration to that shown in Figure 1.

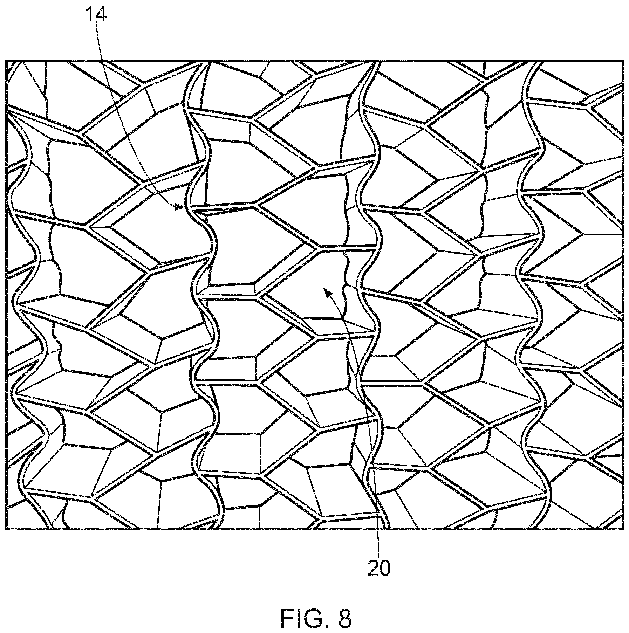

Referring now to Figure 8, a close-up of the mesh layer is shown. The view is taken from the interior of the helmet, i.e., facing towards the concave side. The mesh layer has been deformed into a dome shape and the cell walls have buckled. The third side 24 of each cell has buckled. The direction of the buckling is towards the interior of the pentagon. The buckled wall therefore includes a re-entrant angle. The resulting cross-section is referred to as a 'buckled pentagon'. After buckling, the third side 23 becomes curved.

When the helmet is worn and an impact is sustained, the outer shell 12 prevents piercing of the mesh 14 and transmits the impacting force to the walls 22, 24, 26 of each cell of the mesh 14 that is proximal to the point of impact. The outer shell 12 distributes the impacting force over a large number of cells 20, for example fifty cells 20. This reduces the pressure applied to the mesh 14 and reduces the force applied to each cell 20.

If the impacting force is sufficiently large, the walls 22, 24, 26 of the cells 20 in the region of the impact will deform. The walls 22, 24, 26 of the cells may separate from one another or otherwise fracture, particularly at their intersections. These fractures begin at the outer surface of the mesh 14. The fractures allow the walls 22, 24, 26 to deform and change shape.

As the walls 22, 24, 26 deform, the fractures progress towards the inner side of the mesh 14, the mesh 14 is compressed and the head of the wearer moves relative to the outer shell 12 of the helmet 10. The head of the wearer travels towards the point of impact, entering the space previously occupied by the mesh 14, which has now been compressed.

As the mesh 14 is compressed, air flows from the interior of each cell 20 that is compressed through the open end of the cell 20 into the space 18a between the mesh 14 and the outer shell 12. The air then flows around the mesh 14, possibly entering other cells 20 or exiting the space 18a at the edge of the helmet 10. Because the air flows out of the cells 20 without obstruction, it does not provide any resistance to the collapse of the mesh 14, and so the proportion of the deformation of the mesh 14 that is elastic is reduced relative to EPS.

Because the volume of the mesh 14 is almost entirely air, the mesh 14 can collapse along a larger proportion of its thickness than would be possible for EPS before densification occurs. This allows a greater distance to be travelled by the head of the user relative to the helmet 10, which reduces the acceleration experienced by the head of the user during the impact and reduces the amount of kinetic energy absorbed by the head of the user during the impact.

In a riding accident, it is relatively unlikely that the direction of an impact will be entirely radial. Instead, there is likely to be a tangential component of force applied to the head at the point of impact. In some cases, the tangential component may be the majority of the force applied. The human head has a limited range of rotational motion around some axes. Particularly restricted is lateral rotation of the head about an axis extending perpendicular to the line of the shoulders and to the neck, and situated at the top of the neck. In other words, motion of the head from side to side towards the shoulders (as distinct from nodding or shaking motions as might conventionally indicate assent or dissent to a proposition).

It is important to reduce the amount of rotational motion of the head in the case of an oblique or tangential impact, particularly in the direction described above. This may be achieved by adapting the helmet 10 to move easily relative to the head of the wearer so that the tangential component of the impact may be deflected.

The mesh 14 provides minimal resistance to compression in the plane of the mesh 14. If a force is applied in the plane of the mesh 14, the walls 22, 24, 26 of the cells 20 can collapse and approach one another, offering significantly less resistance than they would to a force applied normally to the plane of the mesh 14. This allows the concave mesh 14 within the helmet 10 to deform with minimal resistance in a direction tangential to the head of the user. Thus, if a tangential force is applied to the helmet 10, this deformation will occur and the helmet 10 will rotate relative to the head of the user, deflecting and partially absorbing the impact.

These embodiments are provided by way of example only, and various changes and modifications will be apparent to persons skilled in the art without departing from the scope of the present invention as defined by the appended claims.

## Claims

1. A helmet (10) comprising an outer shell (12), an inner lining (16) and a mesh (14) between the outer shell (12) and the inner lining (16), the mesh (14) having a plurality of walled cells (20), the length of the cells (20) extending in a substantially normal direction to the outer shell (12) and inner lining (16), each cell (20) substantially having the form of a prism, **characterised in that** the cross section of each prism includes a re-entrant angle and substantially has the form of a buckled pentagon.

2. A helmet (10) as claimed in claim 1 in which the mesh (14) has a thickness of one cell.

3. A helmet (10) as claimed in claim 1 or claim 2, in which each cell (20) is longer in a radial direction than it is wide.

4. A helmet (10) as claimed in any preceding claim in which each cell (20) has a first end and a second end and a side wall (22, 24, 26), each end being open and the side wall (22, 24, 26) connecting the ends.

5. A helmet (10) as claimed in claim 4, in which each end of each cell (20) faces in a radial direction.

6. A helmet (10) as claimed in claim 4 or claim 5 in which the cells (20) are arranged so that the side walls (22, 24, 26) of adjacent cells (20) coincide.

7. A helmet (10) as claimed in any preceding claims in which the thickness of the mesh (14) is substantially between 0.5 cm and 5 cm.

8. A helmet (10) as claimed in any preceding claim in which the width of each cell (20) is between 0.4 cm and 2 cm.

9. A helmet (10) as claimed in any preceding claim in which the axis of each prism is disposed substantially normal to the surface of the helmet (10).

10. A helmet (10) as claimed in any preceding claim, in which the walls (22, 24, 26) of the cells (20) are made of a deformable material.

11. A helmet (10) as claimed in claim 10, in which the deformable material is aluminium foil.

12. A helmet (10) as claimed in any preceding claim in which the mesh (14) is formed from a series of strips of deformable material that are joined and folded to define the cells (20).

13. A helmet (10) as claimed in any preceding claim, in which the outer shell (12) is rigid.

14. A helmet (10) as claimed in any preceding claim, in which the outer shell (12) is formed of a glass fibre composite.

15. A helmet (10) as claimed in any preceding claim, in which the outer shell (12) is formed of a composite including an aramide fibre material.
